Europäisches Patentamt

European Patent Office

Office européen des brevets

(11) Numéro de publication: **0 373 552**

**A1**

(12) **DEMANDE DE BREVET EUROPEEN**

(21) Numéro de dépôt: **89122810.8**

(51) Int. Cl.5: **H04B 7/005**

(22) Date de dépôt: **11.12.89**

(30) Priorité: **15.12.88 FR 8816558**

(43) Date de publication de la demande:
**20.06.90 Bulletin 90/25**

(84) Etats contractants désignés:
**DE ES FR GB IT NL SE**

(71) Demandeur: **ALCATEL TRANSMISSION PAR FAISCEAUX HERTZIENS A.T.F.H.**
**55, rue Greffulhe**
**F-92301 Levallois-Perret Cédex(FR)**

(72) Inventeur: **Hurinville, Bertrand**
**89, rue Baudin**
**F-92300 Levallois Perret(FR)**

(74) Mandataire: **Weinmiller, Jürgen et al**
**Lennéstrasse 9 Postfach 24**
**D-8133 Feldafing(DE)**

(54) **Procédé de mesure de la signature d'un équipement de transmission numérique, et dispositif de mise en oeuvre d'un tel procédé.**

(57) La présente invention se rapporte à un procédé de mesure de la signature d'un équipement de transmission numérique dans lequel la mesure peut être effectuée sans l'adjonction d'appareil spécifique, et dans lequel on fait varier le filtrage numérique à l'émission pour simuler des trajets multiples, et, pour un certain nombre de fréquence, on fait varier la profondeur d'évanouissement jusqu'à obtenir un certain taux d'erreur.

Elle concerne également un dispositif de mise en oeuvre dudit procédé.

Application notamment aux transmissions par faisceaux hertziens numériques.

FIG. 2

EP 0 373 552 A1

## Procédé de mesure de la signature d'un équipement de transmission numérique, et dispositif de mise en oeuvre d'un tel procédé

L'invention concerne un procédé de mesure de la signature d'un équipement de transmission numérique, et un dispositif de mise en oeuvre d'un tel procédé.

L'invention se rapporte plus particulièrement à une mesure de signature effectuée pour des faisceaux hertziens numériques en exploitation.

En effet, dans le cas de transmission de signaux numériques à débit élevé, certains phénomènes liés à la propagation de ces signaux peuvent perturber ladite transmission et ainsi créer des erreurs dans le message transmis. Une mesure de signature permet de qualifier la résistance d'une liaison hertzienne, par exemple, à ce genre de défaut de propagation que l'on assimile à des "trajets multiples", qui apparaissent lorsque le signal radioélectrique transmis suit plusieurs chemins de propagation. En général, pour utiliser cette mesure de signature, on utilise un modèle dit "à deux rayons".

Un article, paru dans "International Conference on measurements for Telecommunication transmission systems" MTTS 85 (conférence publication n° 286), intitulé "Automated signature measurement of operational microwave radio-relay equipment using a novel multipath simulator" de U.D. Dichman, British Telecommunications Research Laboratories, U.K., décrit les connaissances actuelles relatives aux trajets multiples, aux mesures de signature, et aux simulateurs de trajets multiples ; de tels simulateurs ayant pour objet de produire des conditions de tests statiques et dynamiques pour caractériser complètement les capacités d'un équipement numérique à atténuer la distorsion due à des effets de propagations anormales.

Ainsi, dans les dispositifs de l'art connu, on utilise un simulateur de trajets multiples qui peut être réalisé soit en bande de base, soit en fréquence intermédiaire, soit en hyperfréquence. Ces différentes réalisations présentent un certain nombre d'inconvénients, tels que :
- En bande de base, les multiplieurs analogiques utilisés dans un tel simulateur doivent être fiables sur une large bande et insensibles à la température.
- En fréquence intermédiaire, le principal problème concerne le déphaseur utilisé dans le simulateur qui doit être à large bande.
- En hyperfréquence, la réalisation est souvent lourde et coûteuse.

Dans tous les cas, un simulateur de trajets multiples est un appareil complexe et coûteux qu'il faut installer sur la liaison à chaque fois que l'on désire mesurer la signature d'un équipement.

L'invention a pour objet de pallier ces inconvénients.

L'invention propose, à cet effet, un procédé de mesure de la signature d'un équipement de transmission numérique, caractérisé en ce que :
- on fait varier le filtrage numérique à l'émission pour simuler des trajets multiples,
- pour un certain nombre de fréquences, on fait varier la profondeur d'évanouissement jusqu'à obtenir un taux d'erreur déterminé.

Un tel procédé permet avantageusement de mesurer à tout moment la signature d'un bond radioélectrique sans l'adjonction d'un appareil de simulation de trajets multiples.

Les caractéristiques et avantages de l'invention ressortiront d'ailleurs de la description qui va suivre, à titre d'exemple non limitatif, en référence aux figures annexées sur lesquelles :
- la figure 1 illustre schématiquement la transmission d'un signal numérique entre deux stations ;
- les figures 2 et 3 illustrent le fonctionnement du procédé de l'invention,
- la figure 4 représente un dispositif de mise en oeuvre du procédé de l'invention.

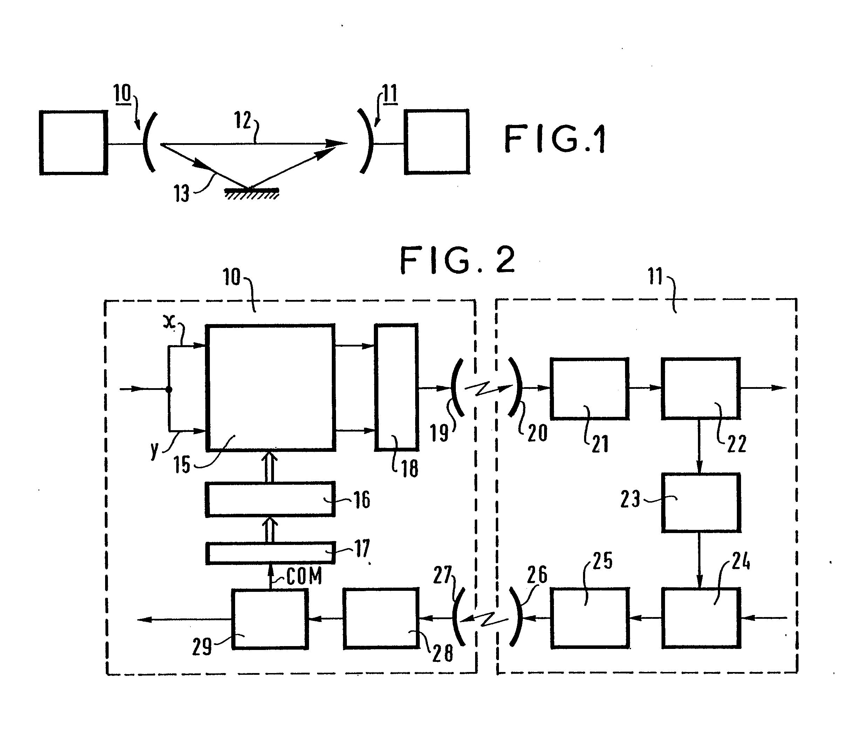

Si l'on considère la représentation schématique d'une transmission numérique, telle que représentée à la figure 1, on a :
- une station 10 émettrice,
- une station 11 réceptrice,
- un trajet direct 12 du signal émis par la station 10,
- un trajet réfléchi 13 du signal émis par la station 10.

La fonction de transfert d'un tel canal de transmission peut s'écrire de la manière suivante :
$$H(\omega) = A (1 + \mu\, e^{j(\Phi - \omega \tau)})$$
avec : A : affaiblissement plat

$\tau$ : retard entre les deux trajets (généralement aux environs de 6.3 ns)

$(\Phi, \mu)$ : caractéristiques du trajet réfléchi par rapport au trajet direct (phase et affaiblissement sélectif)

$\omega$ : pulsation = $2\pi F$

La courbe de signature est obtenue en faisant varier le couple $(\Phi, \mu)$ afin d'avoir un taux d'erreur donné sur la liaison ($10^{-3}$ habituellement).

Pour obtenir une telle courbe, le problème consiste donc à créer des trajets multiples : l'invention a donc pour objet de simuler ces trajets multiples en faisant varier ladite fonction de transfert à laquelle correspondent un certain nombre de coefficients contenus dans des mémoires.

L'invention consiste à utiliser le filtrage numérique émission ou réception pour simuler ces trajets multiples. On utilise alors une fonction déjà existante dans le faisceau pour réaliser des mesures qualitatives de la liaison. La figure 2 donne un exemple de structure dans laquelle il est possible d'utiliser le filtrage pour effectuer des mesures de signature. Dans la suite on considère à titre d'exemple les hypothèses suivantes :
- une modulation du type 4PSK, 16QAM,64 QAM,......,
- un filtrage réalisé de façon numérique à l'émission, les coefficients du filtre pouvant varier entre différentes valeurs (fonctions de transfert non figées),
- une connaissance à tout instant du taux d'erreur sur la liaison (utilisation des systèmes d'aide à l'exploitation).

Ainsi, schématiquement, la station émission 10 comprend notamment :
- un circuit de filtrage 15 numérique dont les coefficients sont contenus dans des mémoires 16, ROM par exemple, pilotées par un circuit 17 de génération d'adresses,
- un circuit de modulation et d'émission 18, pour passage en fréquence intermédiaire et en hyperfréquence, suivi de l'antenne d'émission 19.

La station de réception 11, qui reçoit la voie émise, comprend notamment :
- une antenne 20 suivie d'un circuit 21 de réception et de démodulation,
- un circuit 22 de récupération de la trame réception qui contient notamment l'information utile et les extra bits,
- un circuit 23 de récupération du taux d'erreur.

Pour une voie de service, ladite station 11 est une station émettrice comprenant :
- un circuit 24 d'obtention de la trame émission,
- un circuit 25 de modulation et d'émission suivi d'une antenne 26.

Pour cette voie de service, la première station 10 comprend schématiquement :
- une antenne 27 suivie d'un circuit 28 de réception et de démodulation,
- un circuit 29 de récupération de la trame réception qui commande le circuit 17 de génération d'adresses des mémoires.

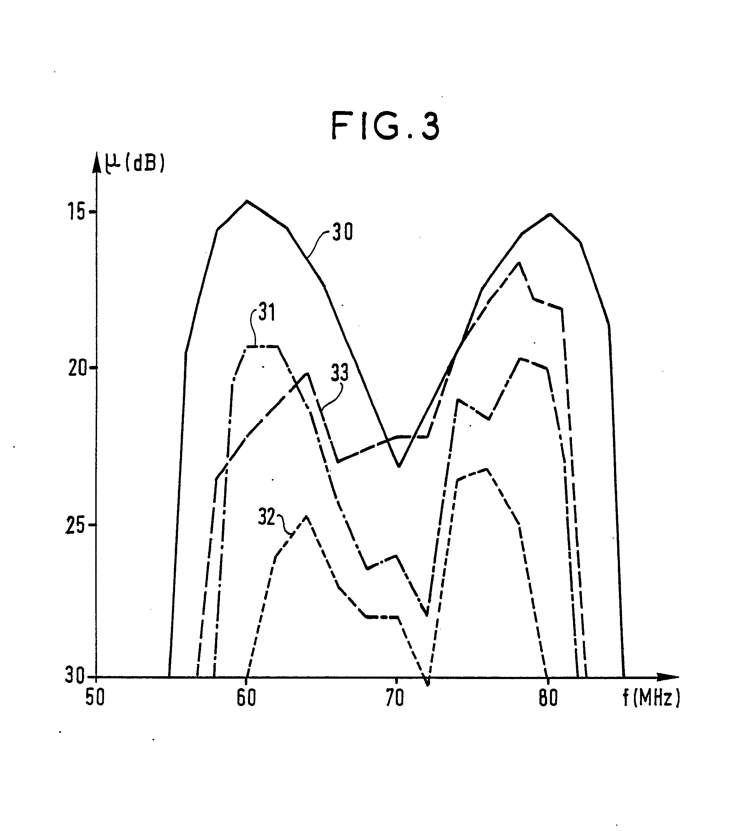

Les coefficients du filtre numérique émission 15 de la station émettrice 10 sont contenus dans les mémoires rapides 16 (RAM ou ROM). En agissant sur les adresses de ces mémoires, la fonction du transfert du filtre peut varier. On peut ainsi simuler des trajets multiples. Soit M le nombre total de coefficients du filtre, chaque groupe de M coefficients représente une certaine fonction de transfert (en amplitude et en phase) qui correspond à un couple ($\Phi$ ,$\mu$ ) particulier. Le circuit 17 de génération d'adresses mémoires convertit ses informations d'entrée COM en adresses mémoire. Ces signaux COM proviennent de la station 11 en utilisant la voie de service. Le principe de la mesure est de sélectionner les groupes de M coefficients pour lesquels le taux d'erreur sur la liaison est d'une valeur déterminée : de $10^{-3}$ habituellement. Les couples ($\Phi$ ,$\mu$) ainsi obtenus permettent de tracer la courbe de signature. La capacité des mémoires dépend à la fois de la longueur du filtre numérique, du nombre de mesures possibles en fréquence (paramètre $\Phi$ ) et du pas de quantification de l'affaiblissement sélectif (paramètre $\mu$). Les courbes de signatures ont généralement l'allure représentée à la figure 3.

Les quatre courbes de signature représentées sur cette figure correspondent à quatre taux d'erreurs TE différents :
- la courbe 30 à un taux TE = $10^{-6}$,
- la courbe 31 à un taux TE = $10^{-3}$,
- la courbe 32 à un taux d'erreur trop important pour qu'une synchronisation soit possible (décrochage),
- la courbe 33 à un taux TE correspondant à un raccrochage après un décrochage.

Pour obtenir de telles courbes de signature, pour différentes fréquences successives, on fait varier les profondeurs d'évanouissement en augmentant jusqu'à ce que le taux d'erreur soit égal à une valeur déterminée, $10^{-3}$ par exemple, et on mémorise alors cette profondeur d'évanouissement.

On obtient ainsi tous les points correspondant à un taux d'erreur déterminé.

On peut agir de même pour une autre valeur du taux d'erreur (ou pour le décrochage et le raccrochage) avec stockage en mémoire de ces différentes valeurs.

Si l'on désire effectuer une mesure précise de la signature, il faut un nombre important de configurations (en général, ceci est fait en plateforme d'essai avec un simulateur de trajets multiples). Par contre, s'il s'agit davantage d'un contrôle et non d'une mesure de la signature d'un équipement (pour vérifier par exemple le fonctionnement d'un égaliseur temporel) quelques valeurs de la phase $\Phi$ (ou de manière équivalente de la fréquence) peuvent être suffisantes.

Les résultats peuvent être exploités depuis l'une ou l'autre des stations 10 et 11. On peut également envisager de mesurer la signature d'un bond depuis une station intermédiaire appartenant à la même liaison.

En absence de simulation de trajets multiples, le filtre 15 reprend sa fonction première en réalisant tout ou partie de la fonction de transfert de Nyquist.

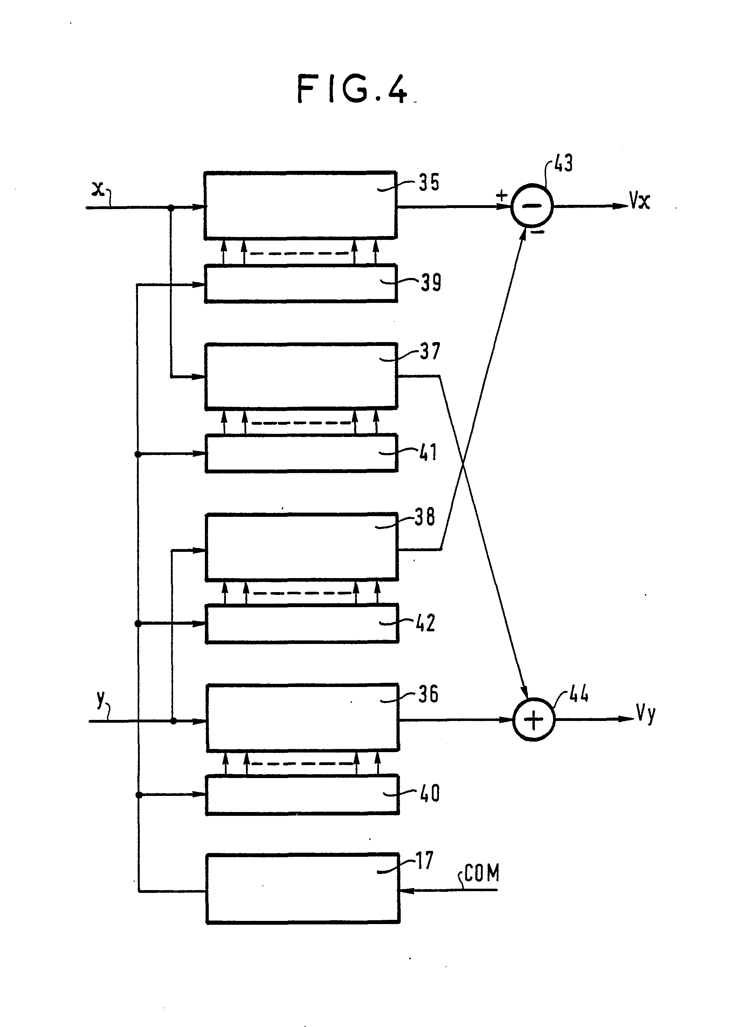

La figure 4 représente un tel filtre numérique de structure croisée qui permet d'apporter des corrections de temps de propagation de groupe sur le signal en fréquence intermédiaire (FI) et de réaliser des trajets multiples décentrés. Pour simuler les trajets multiples, on utilise alors deux blocs de structure identiques, mais associés à des coefficients différents. Ainsi on a quatre cellules de filtrage numérique 35, 36, 37 et 38, associées respectivement à deux mémoires 39, de coefficients directs et à deux mémoires 41, 42 de coefficients en quadrature.

Il y a ainsi une interaction entre les deux voies X et Y qui sont entrées respectivement sur deux cellules de filtrage 35, 37 (ou 36, 38) ; les sorties respectives de la première et de la quatrième cellule 35 et 39 étant entrées sur les entrées + et - d'un soustracteur 43, et celles de la seconde et de la troisième cellule 36 et 37 sur les deux entrées d'un additionneur 44.

En croisant ainsi les voies X et Y on arrive à créer des dissymétries sur le spectre, telles que l'on ait les fonctions de transfert suivantes :

$$H_X(\omega) = H1(\omega) - j\,H3(\omega)$$
$$H_Y(\omega) = H4(\omega) + j\,H2(\omega)$$

avec H1, H2, H3 et H4 correspondant au quatre cellules de filtrage.

Le circuit de génération d'adresses 17 des mémoires 39, 40, 41, 42 permet de générer les différentes configurations désirées.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1/ Procédé de mesure de la signature d'un équipement de transmission numérique, caractérisé en ce que la mesure peut être effectuée en exploitation sans l'adjonction d'appareil spécifique, et en ce que :
- on fait varier le filtrage numérique à l'émission pour simuler des trajets multiples,
- pour un certain nombre de fréquences, on fait varier la profondeur d'évanouissement jusqu'à obtenir un certain taux d'erreur.

2/ Dispositif de mise en oeuvre du procédé selon la revendication 1, caractérisé en ce que le filtre numérique d'émission est de structure croisée.

3/ Dispositif selon la revendication 2, caractérisé en ce que le filtre comprend quatre cellules de filtrage (35, 36, 37 et 38) associées respectivement à deux mémoires (39, 40) de coefficients directs et à deux mémoires (41, 42) de coefficients en quadrature, les sorties respectives de la première et de la quatrième cellule (35 et 38) étant entrées sur les entrées + et - d'un soustracteur (43) et celles de la seconde et de la troisième cellule (36 et 37)

sur les deux entrées d'un additionneur (44).

FIG.1

FIG. 2

EP 0 373 552 A1

# FIG.3

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 619 175 (ANT) * Colonne 1, ligne 64 - colonne 2, ligne 7; colonne 3, ligne 61 - colonne 4, ligne 20; figure 3 * | 1-3 | H 04 B 7/005 |
| A,D | INTERNATIONAL CONFERENCE ON MEASUREMENTS FOR TELECOMMUNICATIONS TRANSMISSION SYSTEMS, MTTS'85, 1985, no. 286, pages 108-111; G.D. RICHMAN: "Automated signature measurement of operational microwave radio-relay equipment using a novel multipath simulator" * Page 109, colonne de droite, ligne 1 - page 110, colonne de gauche, ligne 2; figure 2 * | 1-3 | |
| A | L'ONDE ELECTRIQUE, vol. 66, no. 2, mars 1986, pages 124-129, Paris, FR; O. TOUTAN et al.: "Auto-adaptivité dans les faisceaux hertziens numériques" * Page 115, colonne de droite, ligne 20 - page 116, colonne de gauche, ligne 24; figure 3 * | 1 | **DOMAINES TECHNIQUES RECHERCHES (Int. Cl.5)** H 04 B H 04 L |
| A | COMMUNICATIONS & TRANSMISSION, vol. 7, no. 1, avril 1985, pages 5-30, Paris, FR; J.M. BEDDOK et al.: "Transmissions à 140 Mbit/s par faisceaux hertziens à 6 et 11 GHZ" * Page 10, lignes 1-20 * | 1 | |

Le présent rapport a été établi pour toutes les revendications

| Lieu de la recherche | Date d'achèvement de la recherche | Examinateur |
|---|---|---|
| LA HAYE | 26-03-1990 | CRETAINE P.A. |

EPO FORM 1503 03.82 (P0402)